# EUROPÄISCHE PATENTANMELDUNG

(11) **EP 1 170 417 A1**
(43) Veröffentlichungstag der Anmeldung: **09.01.2002**
(21) Anmeldenummer: 01112216.5
(22) Anmeldetag: 18.05.2001
(51) Int. Cl.: D21B 1/32, D21D 5/04

(54) **Verfahren zum Auflösen und Reinigen von störstoffhaltigem Altpapier**

(30) Priorität: 07.07.2000 DE 10033215
(71) Anmelder: Voith Paper Patent GmbH, 89522 Heidenheim (DE)
(72) Erfinder: Müller, Wolfgang, 88250 Weingarten (DE)

(57) **Zusammenfassung**

Das Verfahren dient zum Auflösen von störstoffhaltigern Altpapier (A). Dieses wird z.B. zunächst in eine rotierende Auflösetrommel (1) eingetragen, mit Wasser (W) vermischt und so lange mechanisch behandelt, bis es als aufgelöster Altpapierstoff (A1) aus der Auflösetrommel (1) ausgetragen werden kann. Dieses gelangt sodann in einen Sortierbehälter (2), welcher mit einem Sieb (3) versehen ist und aus dem der überwiegende Teil der mit dem aufgelösten Altpapierstoff (A1) eingetragenen Störstoffe (R1, R2) entfernt wird.

## Beschreibung

Die Erfindung bezieht sich auf ein Verfahren gemäß dem Oberbegriff des Anspruchs 1.

Bekanntlich können zur Auflösung von Altpapier unterschiedliche Maschinen, wie z.B. Pulper oder Auflösetrommeln verwendet werden. Der Pulper ist eine Maschine mit einem feststehenden Trog zur Aufnahme von Altpapier und Wasser, in dem sich mindestens ein Rotor befindet, der für die Bewegung des Troginhaltes sorgt. Eine Auflösetrommel besteht im wesentlichen aus einem rotierbaren liegenden Zylinder, der in der Regel nicht gelocht ist und meist an seinen Stirnflächen ringförmige Abdeckbleche enthält, um unerwünschtes Austreten des Stoffes zu verhindern. In ihr wird das mit Wasser versetzte Altpapier durch Anheben, Rutschen und Reiben infolge der Relativbewegungen der Stoffanteile zueinander aufgelöst. Verfahren, die mit einer Auflösetrommel arbeiten, haben bekanntlich den Vorteil einer wirksamen und dennoch schonenden Auflösung, sowohl was empfindliche Fasersorten als auch sortierbar zu erhaltende unerwünschte Begleitstoffe, also die Störstoffe, betrifft. Sie sind auch bei hohem Störstoffgehalt des Altpapiers sicher zu betreiben.

Die DE 197 36 143 A1 schlägt ein Verfahren vor, bei dem zwei Trommeln nacheinander benutzt werden. Dabei dient die erste der Auflösung und Vermischung mit Wasser. In der zweiten werden unerwünschte Bestandteile des Altpapiers aussortiert, wozu der ganze Stoff in eine große Sortiertrommel mit relativ großen Sortieröffnungen eingetragen wird. Das funktioniert zwar, erfordert aber große Apparate mit entsprechenden Kosten und hohem Platzbedarf. Auch sind die Energiekosten der zweiten Trommel relativ hoch, wenn man bedenkt, dass es sich um eine Sortiertrommel handelt.

Ein spezielles Auflöseverfahren für schwierig auflösbare Sorten wird z.B. in der EP 0 486 904 A1 beschrieben. Dort dient die Trommel zum Einweichen des Altpapiers. Ihr folgt eine Grobreinigung, und erst anschließend wird der Stoff gesamthaft mit erheblicher Zugabe von Auflösechemikalien in einer weiteren Maschine, z.B. einem Pulper, aufgelöst.

Aus der EP 0 898 012 A1 ist ein Verfahren bekannt, bei dem sich an eine Auflösetrommel ein Behälter 27 anschließt, der zur Aufnahme des aus der Auflösetrommel stammenden Stoffes geeignet ist. Es finden sich jedoch nur wenige konkrete Angaben über die Betriebsweise eines solchen Behälters. Insbesondere wird die Entfernung der in diesem Behälter sich ansammelnden Störstoffe nur wenig erklärt.

Der vorliegenden Erfindung liegt die Aufgabe zu Grunde, ein Verfahren zu schaffen, bei dem auch Altpapier effektiv aufgelöst werden kann, das mit Störstoffen belastet ist. Das Verfahren soll platzsparend und kostenmäßig günstig sein. Die Störstoffe sollen dabei weitgehend aussortiert werden oder wenigstens ausreichend sortierbar bleiben.

Diese Aufgabe wird durch die Kennzeichen des Anspruchs 1 gelöst.

Dabei wird insbesondere die Möglichkeit der Auflösetrommel, das eingetragene Altpapier betriebssicher und ökonomisch auflösen zu können, optimal genutzt. Besondere Vorteile kann dabei die Verwendung einer hochwirksamen Auflösetrommel mit eingebautem Verdrängerkörper bieten, wie sie z.B. aus der schon erwähnten DE 197 36 143 A1 bekannt ist. Als Auflösevorrichtung kann in bestimmten Fällen auch ein Stofflöser verwendet werden.

Der erfindungsgemäß eingesetzte Sortierbehälter erfüllt auf einfache Weise mehrere Funktionen gleichzeitig. In ihm kann die Verdünnung des aus der Auflösetrommel stammenden Hochkonsistenzstoffes erfolgen, wobei in der Regel der zur Vermischung der Stoffe benötigte Umtrieb mit demselben Organ durchgeführt wird, das auch zur Freihaltung des Siebes dieses Sortierbehälters dient. Da mit Hilfe des Verfahrens bereits in der Auflösetrommel eine gute Auflösung erreicht wird, kann der Betrieb im Sortierbehälter so eingestellt werden, dass praktisch keine weitere Auflösung mehr erfolgt. Auch bei einer hohen Schmutzfracht des Altpapiers ist daher ein problemloser Betrieb des Sortierbehälters möglich. Mit Vorteil kann er direkt unter der Auslauföffnung der Auflösevorrichtung, z.B. der Auflösetrommel aufgestellt werden, so dass Transporteinrichtungen, die teuer und bei hoher Schmutzfracht verstopfungsanfällig wären, eingespart werden können.

Im Vergleich mit einer Sortiertrommel für den gesamten aus der Auflösetrommel stammenden Stoff hat der Sortierbehälter den Vorteil, wesentlich kleiner zu sein. Zwar sind auch Sortiertrommeln weitgehend betriebssicher, erfordern aber relativ große Sortieröffnungen, was eine geringere Sortierqualität bedeutet. Auch ist der Energiebedarf einer entsprechend groß zu dimensionierenden Sortiertrommel höher als der des Sortierbehälters. Ähnliches gilt auch bei Trommeln, die sowohl eine Auflösezone (ohne Löcher), als auch eine gelochte Sortierzone enthalten.

Besonders platzsparend fällt ein solcher Sortierbehälter aus, wenn das Sieb in seiner Seitenwand angebracht ist. Das ermöglicht eine kompakte Anordnung und gleichzeitig die sichere Erfassung aller aus der Austragsöffnung der Auflösetrommel herausfallenden Bestandteile des Altpapiers. Wenn sich Sieb und Siebräumer nicht am Boden des Sortierbehälters befinden, sind sie weniger dem Verschleiß durch Schwerteile ausgesetzt

Das Verfahren eignet sich besonders für eine kontinuierliche Auflösung, sowohl was den Betrieb in der Auflösevorrichtung, als auch was den im Sortierbehälter betrifft. Eine solche Fahrweise ist schon deshalb anzustreben, weil dadurch alle Apparate gleichmäßig ausgelastet sind und weniger Puffervolumen bereitgestellt werden muss.

Die Erfindung und ihre Vorteile werden beschrieben an Hand von Zeichnungen. Dabei zeigen:
- Fig. 1: ein Verfahrensschema;
- Fig. 2 und 3: Varianten des Sortierbehälters;
- Fig. 4: Beispiel für einen Siebräumer im Sortierbehälter;
- Fig. 5: ein Sortierbehälter mit rotierendem Sieb;
- Fig. 6: ein kegelstumpfförmiges rotierendes Sieb am Sortierbehälter, im Schnitt dargestellt;
- Fig. 7: dasselbe in Aufsicht dargestellt.

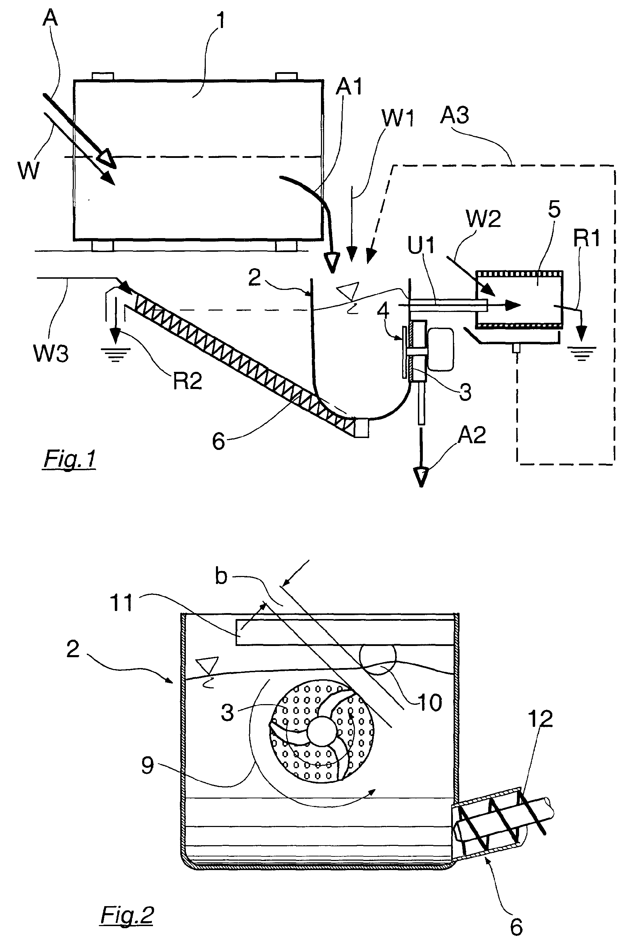

Das Schema der Fig. 1 erläutert die Durchführung des Verfahrens an einem besonders typischen Beispiel. Das Altpapier A wird zusammen mit Wasser W in eine Auflösetrommel 1 eingefüllt und darin in an sich bekannter Weise aufgelöst. Die Auflösetrommel hat in der Regel einen undurchlässigen Mantel und bearbeitet die Mischung aus Altpapier und Wasser so lange, bis sie als aufgelöster Altpapierstoff A1 am Auslaufende der Auflösetrommel 1 austreten kann. Dieser hat einen Feststoffgehalt vorzugsweise zwischen 15 und 25 %. Geodätisch unterhalb der Auflösetrommel 1 ist der oben offene Sortierbehälter 2 angeordnet. Aus dem Sortierbehälter wird eine Gutstofffraktion A2 durch das Sieb 3, welches mit einem Siebräumer 4 in an sich bekannter Weise von Verstopfungen frei gehalten wird, abgepumpt. Auf Grund der günstigen Verfahrensführung kann das Sieb 3 mit relativ kleinen Sieböffnungen versehen sein, z.B. 8 mm oder noch darunter. Eine solche Lochung kann in diesem frühen Verfahrensstadium als klein bezeichnet werden, insbesondere da der Sortierbehälter 2 die gesamte Schmutzfracht, die mit dem Altpapier in die Auflösetrommel 1 eingetragen wurde, enthält. In speziellen Fällen, z.B. bei der Auflösung von Deinking-Ware, können die Sieböffnungen noch kleiner, z.B. 2 mm groß, sein.

Die Schmutzfracht des Altpapiers lässt sich einteilen in Leichtschmutz, also Stoffe, die auf Grund ihrer Dichte in der Faserstoffsuspension nicht absinken, und Schwerschmutz. Der Leichtschmutz besteht im wesentlichen aus Kunststofffolien und Schaumstoffen und kann aus dem Sortierbehälter 2 in einem Überlaufstrom U1 zum Abfließen gebracht werden. Bei dem hier gezeigten Beispiel wird der Überlaufstrom U1 weiter verdünnt mit Wasser W2 und dann in einer Sortiertrommel 5 von Wasser und eventuell anhaftenden Papierfasern befreit. Der so gebildete die leichten Störstoffe R1 enthaltende Rejekt kann in der Regel gleich entsorgt werden. Der wässrige Stoffstrom, der die Lochung der Sortiertrommel 5 passiert hat, wird als Akzept A3 z.B. in den Sortierbehälter 2 zurückgeleitet. Die sich am Boden des Sortierbehälters 2 bevorzugt absetzenden schweren Störstoffe R2 werden über eine Schwerteilentfernungsvorrichtung 6 abgeleitet und mit Vorteil z.B. durch eine nach oben laufende Schneckenförderung über das Flüssigkeitsniveau des Sortierbehälters 2 angehoben. Dabei kann durch Zugabe von weiterem Wasser W3 eine Gegenströmung erzeugt werden, die das Austragen von brauchbarem Faserstoff weitgehend verhindert und die Schnecke frei hält. Auf diese Weise fallen die schweren Störstoffe R2 ebenfalls deponiefähig an.

Die hier gezeigten Beispiele zur Entfernung der leichten Störstoffe R1 und schweren Störstoffe R2 haben den Vorteil, dass große und teure Schieber in diesen Störstoffströmen nicht benötigt werden. Solche Schieber sind wegen der Grobheit der darin geführten Stoffe als Quelle stetiger Störungen bekannt.

Die in der Fig. 1 skizzierten Apparaturen zur Durchführung des erfindungsgemäßen Verfahrens sind lediglich schematisch dargestellt, also nicht in ihren konstruktiven Einzelheiten. Diese richten sich nach den quantitativen und qualitativen Anforderungen und den räumlichen Gegebenheiten. So ist z.B. in dieser Figur die Auflösetrommel 1 in Seitenansicht dargestellt, um den Stofffluss besser zeigen zu können. In anderen Fällen kann sie rechtwinkelig zu der Antriebswelle des Siebräumers 4 angeordnet sein.

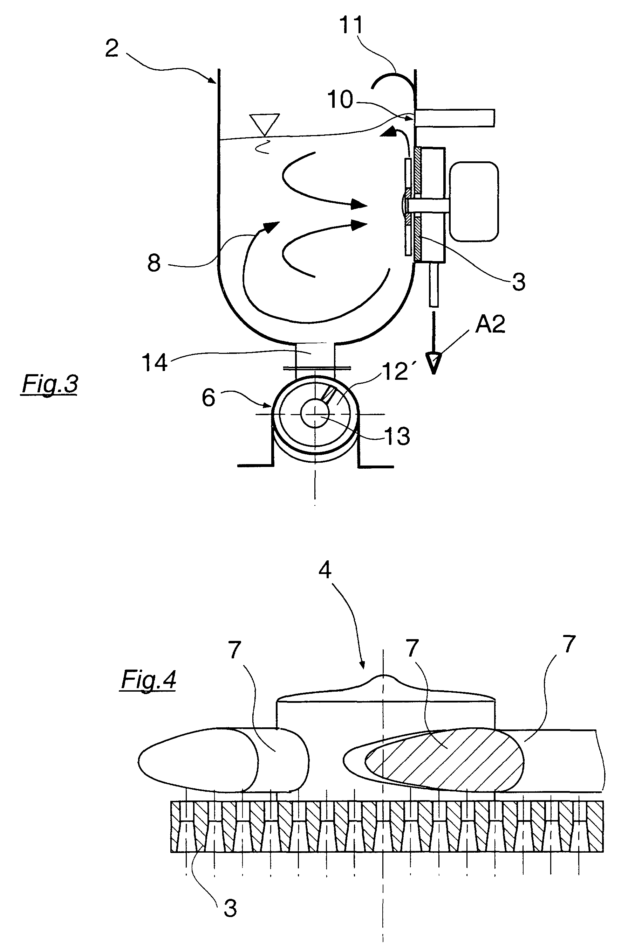

Typische Ausführungsformen des Sortierbehälters, der gewissermaßen die Kernapparatur bei der Durchführung des Verfahrens ist, werden in den Figuren 2 und 3 noch etwas genauer gezeigt, ohne dass es sich hierbei um Konstruktionszeichnungen handelt. In beiden Fällen werden seitlich stehende ebene Siebe 3 verwendet, deren Siebräumer 4 als Flügelrotor ausgebildet sind. Ein Flügelrotor erzeugt sowohl eine Umfangsströmung 9 (Fig. 2), als auch eine Umtriebströmung 8 (Fig. 3). Letztere führt zu einer Ansaugung der Suspension im Zentrum des Rotors. Dabei können die Flügel 7 des Flügelrotors ein foilartiges Profil haben, z.B. wie in Fig. 4 gezeigt, welches kraftwirtschaftlich günstig und ohne nennenswerte Auflösewirkung die Suspension bewegt. Der Rotor hält nicht nur die Öffnungen des Siebes 3 frei, sondern spült auch die sich in derselben Seitenwand befindende Öffnung 10 für den die leichten Störstoffe abführenden Überlaufstrom. Aus diesem Grund ist der Abstand b zwischen Öffnung 10 und radialer Außenkontur der Flügel 7 nicht zu groß gehalten, vorzugsweise unter 500 mm.

Sowohl in Fig. 2 als auch in Fig. 3 wird als Schwerteilentfernungsvorrichtung 6 eine schräg nach oben fördernde Schneckenfördereinrichtung verwendet. Die in Fig. 2 gezeigte ist seitlich an den Bodenbereich des Sortierbehälters 2 angeschlossen, und zwar so, dass die Umfangsströmung 9 die Schwerteile zu der Schwerteilentfernungsvorrichtung 6 hintreibt. Wie in Fig. 3 gezeigt, kann aber auch eine separate, unten angesetzte Schwerteilfalle 14 vorhanden sein. Man erkennt femer, dass gemäß Fig. 3 der Kern 13 der Schneckenwendel 12 freigehalten ist, also keine zentrale Schneckenwelle enthält, im Gegensatz zur konventionellen Schneckenwende 12 in Fig. 2. Es sind auch andere Schwerteilentfernungsvorrichtungen denkbar, z.B. Becherwerke, Kratzförderer oder gegengespülte Absetzbehälter.

Die geodätische Höhe der Öffnung 10 für die leichten Störstoffe wird mit Vorteil oberhalb des Flüssigkeitsniveaus bei Stillstand des Rotors positioniert, so dass der Sortierbehälter 2 nicht von selbst ausläuft. Wird dagegen der Rotor in Bewegung gesetzt, bildet sich an dieser Stelle ein erhöhter Flüssigkeitsstand, der dazu führt, dass ein Teil der Suspension als Überlaufströmung abfließt. Auf diese Weise kann ohne aufwendige Schiebereinrichtungen ein ausreichend dimensionierter Überlaufstrom aus dem Sortierbehälter 2 abgezogen werden. An der Seitenwand, an der auch der Siebräumer 4 angebracht ist, befindet sich oberhalb der Öffnung 10 ein gewölbtes Ableitblech 11, welches zur Umlenkung der nach oben gerichteten Strömungskomponente zurück in den Behälter dient. Es kann - anders als hier gezeichnet - sich auch über die ganze Breite des Behälters erstrecken.

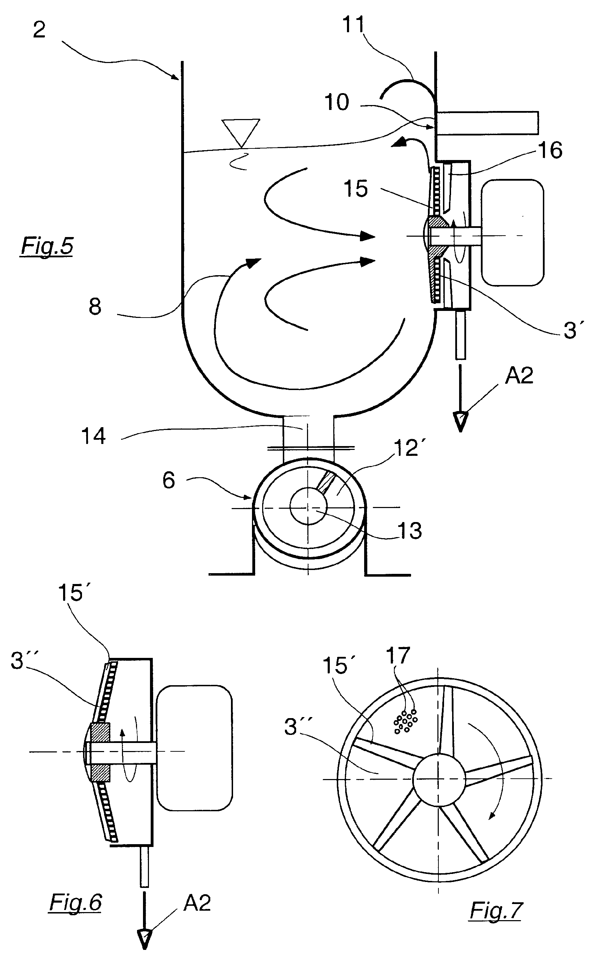

Es kann durchaus von Vorteil sein, das Sieb des Sortierbehälters 2 in Rotation zu versetzen. Auch wenn dadurch der apparative Aufwand etwas steigen mag, können die erzielbaren Vorteile entscheidend sein. Durch ein rotierendes Sieb 3' in ebener Ausführung gemäß Fig. 5 oder durch ein kegelstumpfförmiges Sieb 3" gemäß Fig. 6 und 7 können insbesondere großflächige Stoffe, also etwa Kunststofffolien, sehr schnell und ohne nennenswerten Verschleiß aus dem Siebbereich wieder entfernt werden. Wenn erforderlich, kann die Freihaltung des Siebes bei solchen Ausführungsformen durch stillstehende, auf der Gutstoffseite angebrachte Siebräumer 16 gesichert werden. Es versteht sich, dass der Umtrieb 9, wie er in Fig. 2 bei einem stehenden Siebblech beschrieben ist, auch durch ein rotierendes Siebblech 3' bzw. 3" erzeugt werden kann, insbesondere dann, wenn solche Siebe mit den Schleuderleisten 15 bzw. 15' versehen sind.

Die Fig. 7 zeigt auch, dass die Schleuderleisten 15' nicht unbedingt streng radial ausgerichtet sein müssen, sondern eine schräge Kante haben können, was das Abschleudern von angelegten Stoffen begünstigt. Diese Fig. 7 zeigt auch exemplarisch einige der Sortierlöcher 17.

## Patentansprüche

1. Verfahren zum Auflösen und Reinigen von störstoffhaltigem Altpapier mit den folgenden Behandlungsschritten
1.1 Einfüllen des Altpapiers (A) in eine Auflösevorrichtung,
1.2 Vermischung mit zugegebenem Wasser (W), wobei die so erzeugte Mischung einen Feststoffgehalt zwischen 8 und 40 % hat,
1.3 mechanische Behandlung der Mischung, so dass ein aufgelöster Altpapierstoff (A1) erzeugt wird,
1.4 Austragen des aufgelösten Altpapierstoffes (A1) aus der Auflösevorrichtung in einen offenen Sortierbehälter (2),
1.5 Verdünnen auf einen Feststoffgehalt zwischen 1 % und 8 %,
1.6 Entnahme einer Gutstofffraktion (A2) durch ein Sieb (3, 3', 3") hindurch und deren Weiterverarbeitung,
**dadurch gekennzeichnet,**
**dass** der überwiegende Teil der mit dem aufgelösten Altpapierstoff (A1) in den Sortierbehälter (2) eingetragenen Störstoffe (R1, R2) im Sortierbehälter (2) gesammelt und daraus entfemt wird und dass Störstoffe (R2), welche im wesentlichen schwerer sind als Wasser, im Bodenbereich des Sortierbehälters (2) gesammelt und aus diesem durch eine spezielle Schwerteilentfernungsvorrichtung (6) heraustransportiert werden.

2. Verfahren nach Anspruch 1,
**dadurch gekennzeichnet,**
**dass** als Auflösevorrichtung eine Auflösetrommel (1) verwendet wird, in der durch Kräfte, die beim Heben, Rutschen und Reiben der Mischung innerhalb der Auflösetrommel (1) aufttreten, aufgelöst wird.

3. Verfahren nach Anspruch 1 oder 2,
**dadurch gekennzeichnet,**
**dass** das Austragen des aufgelösten Altpapierstoffes (A1) aus der Auflösetrommel (1) in den Sortierbehälter (2) kontinuierlich erfolgt.

4. Verfahren nach Anspruch 1, 2 oder 3,
**dadurch gekennzeichnet,**
**dass** der Altpapierstoff (A1) vor dem Eintrag in den Sortierbehälter (2) bis auf einen Reststippengehalt von höchstens 5 % aufgelöst wird.

5. Verfahren nach einem der voranstehenden Ansprüche,
**dadurch gekennzeichnet,**
**dass** die Gutstofffraktion (A2) durch ein ebenes Sieb (3), welches seitlich am Sortierbehälter (2) angebracht ist, entnommen wird.

6. Verfahren nach einem der voranstehenden Ansprüche,
**dadurch gekennzeichnet,**
**dass** im Sortierbehälter (2) ein Siebräumer (4) zur Freihaltung des Siebes (3) an diesem entlang bewegt wird und dass der Siebräumer (4) mit Flügeln (7) versehen ist, die ein rundes oder ovales Profil haben.

7. Verfahren nach einem der Ansprüche 1 bis 5,
**dadurch gekennzeichnet,**
**dass** im Sortierbehälter (2) ein Siebräumer (4) zur Freihaltung des Siebes (3) an diesem entlang bewegt wird und dass der Siebräumer (4) mit Flügeln (7) versehen ist, die ein foilartiges Profil haben.

8. Verfahren nach einem der Ansprüche 1 bis 4,
**dadurch gekennzeichnet,**
**dass** die Gutstofffraktion (A2) durch ein rotieres Sieb (3', 3''), welches seitlich am Sortierbehälter (2) angebracht ist, entnommen wird.

9. Verfahren nach einem der Anspruch 8,
**dadurch gekennzeichnet,**
**dass** das rotierende Sieb (3', 3'') mit mitbewegten Schleuderflügeln (15,15') versehen ist.

10. Verfahren nach Anspruch 8 oder 9,
**dadurch gekennzeichnet,**
**dass** das rotierende Sieb (3', 3'') mit auf der Gutstoffseite angebrachten feststehenden Siebräumern (16) von Verstopfungen frei gehalten wird.

11. Verfahren nach Anspruch 8, 9 oder 10,
**dadurch gekennzeichnet,**
**dass** das rotierende Sieb (3') eben ist.

12. Verfahren nach Anspruch 8, 9 oder 10,
**dadurch gekennzeichnet,**
**dass** das rotierende Sieb (3'') kegelstumpfförmig ist.

13. Verfahren nach einem der voranstehenden Ansprüche,
**dadurch gekennzeichnet,**
**dass** im Sortierbehälter (2) ein hydraulischer Umtrieb erzeugt wird, mit dessen Hilfe ein Teilstrom der im Sortierbehälter (2) befindlichen Suspension als Überlaufstrom (U1) zum Abfließen gebracht wird, der zumindest einen Teil der leichten Störstoffe (R1) enthält.

14. Verfahren nach Anspruch 13,
**dadurch gekennzeichnet,**
**dass** der hydraulische Umtrieb mit Hilfe eines gewölbten Ableitbleches (11) nach oben begrenzt wird.

15. Verfahren nach Anspruch 13 oder 14,
**dadurch gekennzeichnet,**
**dass** der Überlaufstrom (U1) durch eine Öffnung (10) abgezogen wird, die sich in derselben Seitenwand wie das Sieb (3) befindet.

16. Verfahren nach Anspruch 14 und 15,
**dadurch gekennzeichnet,**
**dass** das Ableitblech (11) den Abzug des Überlaufstromes (U1) unterstützt.

17. Verfahren nach Anspruch 13, 14, 15 oder 16,
**dadurch gekennzeichnet,**
**dass** der Überlaufstrom (U1) an einer Stelle aus dem Sortierbehälter (2) abgezogen wird, deren Abstand (b) vom Siebräumer (4) nicht größer als 500 mm ist.

18. Verfahren nach Anspruch 13, 14, 15, 16 oder 17,
**dadurch gekennzeichnet,**
**dass** der Überlaufstrom (U1) an einer Stelle aus dem Sortierbehälter (2) abgezogen wird, die oberhalb des Flüssigkeitsniveaus im Sortierbehälter (2) bei Stillstand des den hydraulischen Umtrieb erzeugenden Elementes liegt.

19. Verfahren nach Anspruch 13, 14, 15, 16, 17 oder 18,
**dadurch gekennzeichnet,**
**dass** der Überlaufstrom (U1) kontinuierlich abgezogen wird.

20. Verfahren nach Anspruch 13, 14, 15, 16, 17, 18 oder 19,
**dadurch gekennzeichnet,**
**dass** die Störstoffe (R1) aus dem Überlaufstrom (U1) durch eine Sortiertrommel (5) entfernt werden.

21. Vorrichtung nach einem der voranstehenden Ansprüche,
**dadurch gekennzeichnet,**
**dass** als Schwerteilentfemungsvorrichtung (6) für die im Bodenbereich des Sortierbehälters (2) gesammelten Störstoffe (R2) eine schräg nach oben fördernde Schneckenfördereinrichtung verwendet wird.

22. Verfahren nach Anspruch 21,
**dadurch gekennzeichnet,**
**dass** in der Schneckenfördereinrichtung mindestens eine kernlose Schneckenwendel (12') verwendet wird.

23. Verfahren nach Anspruch 21 oder 22,
**dadurch gekennzeichnet,**
**dass** die Störstoffe (R2) über das Flüssigkeitsniveau (14) des Sortierbehälters (2) hinausgefördert werden.

24. Verfahren nach Anspruch 21, 22 oder 23,
**dadurch gekennzeichnet,**
**dass** in der Schneckenfördereinrichtung eine Gegenspülung zurück in den Sortierbehälter (2) erzeugt wird.

25. Verfahren nach einem der voranstehenden Ansprüche,
**dadurch gekennzeichnet,**
**dass** eine Auflösetrommel (1) verwendet wird, deren Mantel undurchlässig ist.

26. Verfahren nach einem der voranstehenden Ansprüche,
**dadurch gekennzeichnet,**
**dass** am Sortierbehälter (2) ein Sieb (3, 3', 3'') verwendet wird mit Sortierlöchern (17), deren Durchmesser zwischen 2 und 4 mm liegt.

27. Verfahren nach einem der voranstehenden Ansprüche,
**dadurch gekennzeichnet,**
**dass** eine Auflösetrommel (1) mit feststehendem Verdrängerkörper verwendet wird.

28. Verfahren nach einem der voranstehenden Ansprüche,
**dadurch gekennzeichnet,**
**dass** vor dem Eintrag des Altpapiers (A) in die Auflösetrommel (1) lediglich die Ballendrähte entfernt werden.
